# EUROPÄISCHE PATENTANMELDUNG

(11) **EP 2 392 919 A1**
(43) Veröffentlichungstag der Anmeldung: **07.12.2011**
(21) Anmeldenummer: 11004605.9
(22) Anmeldetag: 07.06.2011
(51) Int. Cl.: G01N 21/896

(54) **Vorrichtung für das punktuelle Reinigen und Inspizieren von Fehlern an Flachglasscheiben**

(30) Priorität: 23.09.2010 AT 15922010; 07.06.2010 AT 3662010
(71) Anmelder: Sonnleitner, Hermann, 3352 Sankt Peter in der Au (AT)
(72) Erfinder: Sonnleitner, Hermann, 3352 Sankt Peter in der Au (AT)

(57) **Zusammenfassung**

Die Erfindung betrifft eine in einer Produktionsstrecke für Flachglas anzubringende Vorrichtung (3) für das punktuelle Reinigen und Inspizieren von Fehlern an Flachglasscheiben, an welcher eine fehlerhafte Scheibe (1) anhaltbar und behandelbar ist.

Die Normalprojektion der Vorrichtung (3) in die Ebene der zu behandelnden Scheibe (1) ist streifenförmig schmal, wobei die Streifenlängsrichtung zumindest etwa normal zu Scheibentransportrichtung liegt. Im Bereich des besagten Streifens ist eine zu behandelnde Scheibe (1) automatisch so anhaltbar, dass die betroffene Fehlerstelle innerhalb des Streifens liegt. Zumindest an einer Seite der Scheibe (1) ist im Bereich des Streifens jeweils eine der Reinigung und Inspektion dienenden Vorrichtung (3.2, 3.3) in Streifenlängsrichtung an einer Führung verfahrbar angeordnet und automatisch an eine zu behandelnde Fehlerstelle der Scheibe (1) bewegbar.

## Beschreibung

Die Erfindung betrifft eine Vorrichtung für das punktuelle Reinigen und Inspizieren von Fehlern an Flachglasscheiben Im Zuge der automatischen Verarbeitung von Flachglas ist es in vielen Fällen üblich, die Scheiben durch automatische, ganzflächig wirkende Glasreinigungsanlagen zu führen und anschließend in einer so genannten "Visitierstation" auf verbliebene Verunreinigungen und sonstige Fehler wie z.B. Kratzer, Einschlüss,... etc. zu inspizieren und, wenn möglich, dabei auch die behebbaren Fehler zu korrigieren, also Verunreinigungen manuell zu entfernen. Diese Visitierstationen sind bei herkömmlichen Produktionslinien immer so groß wie die max. zu produzierende Scheibengröße, da Scheiben im Zuge der Inspektion angehalten werden und die gesamte Scheibe in einem einzigen Arbeitsgang inspiziert wird.

Der neuerdings immer häufiger werdende Einsatz von automatischen Oberflächen-Inspektionsanlagen, durch welche ebenfalls die gesamte Glasscheibe in einem Arbeitsgang inspiziert wird, hat diesen Ablauf dahingehend verändert, dass das eigentliche Suchen nach Fehlern von automatischen Oberflächen-Inspektionsanlagen übernommen wird und diese Fehler dem Bedienpersonal an der Visitierstation mitgeteilt werden, beispielsweise durch Darstellung der Scheibe mit den Fehlerbereichen auf einem Monitor. Methoden für die automatisierbare optische Fehlererkennung sind beispielsweise in den Schriften WO 200026647 A1, DD 258659 A1, EP 317638 B1, JP 2002257756 A1 und DE 3610484 C2 gezeigt.

Sofern es sich bei der Art des Fehlers nicht um eine Verletzung der Glasoberfläche handelt (wie z.B. Kratzer) bzw. um einen Fehler der im Inneren der Glasscheibe vorliegt (wie z.B. Blasen, Einschlüsse), wird nun versucht diesen Fehler (Schmutz) durch nochmaliges, manuelles Reinigen zu entfernen, damit die Scheibe weiter im Produktionsablauf belassen werden kann.

Hier erschweren insbesondere Fehler an der Hinterseite der Glasscheibe den manuellen Reinigungsvorgang und führen aufgrund der erhöhten Aufwendungen zu längeren Produktionsstillständen an der Produktionslinie (da die Scheibe von hinten nicht einfach zugänglich ist, ist es enorm aufwändig, Verunreinigung von der Hinterseite zu entfernen). Wenn der Fehler nicht behebbar ist, muss die Scheibe trotz des schon stattgefundenen Taktzeitverlustes aus dem Produktionsfluss genommen werden. In Sonderfällen, wenn Taktzeitverlust besonders teuer ist, nimmt man Scheiben, die als fehlerhaft erkannt wurden ohne zusätzliche manuelle Inspektion direkt aus dem Produktionslauf.

Von diesem Stand der Technik ausgehend hat sich der Erfinder die Aufgabe gestellt, eine Vorrichtung zu schaffen, durch welche das nachträgliche punktuelle Korrigieren von Fehlern an Flachglasscheiben derart verbessert wird, dass es weitest möglich automatisiert, einfacher und schneller abläuft.

Zum Lösen der Aufgabe wird davon ausgegangen, dass es - wie oben beschrieben - eine vorgelagerte automatische Fehlererkennung gibt, durch welche die zu behandelnden Fehlerstellen datentechnisch erfasst, aufbereitet und weitergegeben werden. Erfindungsgemäß wird eine Vorrichtung gemäß folgenden Merkmalen vorgesehen:
- In der Normalprojektion auf die Ebene der zu behandelnden Scheibe ist die Vorrichtung streifenförmig schmal und sie ist am Förderweg der Scheiben in deren Produktionslinie so angebracht, dass die Streifenebene parallel zur Scheibenebene liegt und die Streifenlängsrichtung zumindest etwa normal zu Scheibentransportrichtung.
- Im Bereich des Streifens wird eine zu behandelnde Scheibe automatisch so angehalten, dass die betroffene Fehlerstelle innerhalb des Streifens liegt.
- Zumindest an einer Seite der Scheibe ist im Bereich dieses Streifens jeweils eine der Reinigung und Inspektion dienende Vorrichtung in Streifenlängsrichtung verfahrbar an einer Führung angeordnet.

Üblicherweise ist in einer Produktionslinie eine Scheibenseite leicht und eine Scheibenseite schwer für Bedienpersonal zugänglich. Indem man die automatische Reinigungs- und Inspektionsvorrichtung an der schwer zugänglichen Seite der Scheibe anordnet, sind beide Scheibenseiten im Bedarfsfall rasch behandelbar.

Bevorzugt wird man an beiden Seiten der Scheibe eine automatische Reinigungsvorrichtung anbringen, da damit bei wenig stark steigendem Investitionsaufwand ein wesentlich höherer Automatisierungsgrad erreichbar ist.

Die Erfindung wird an Hand einer Zeichnung, in welcher auch vorteilhafte Weiterentwicklungen gezeigt sind, veranschaulicht.

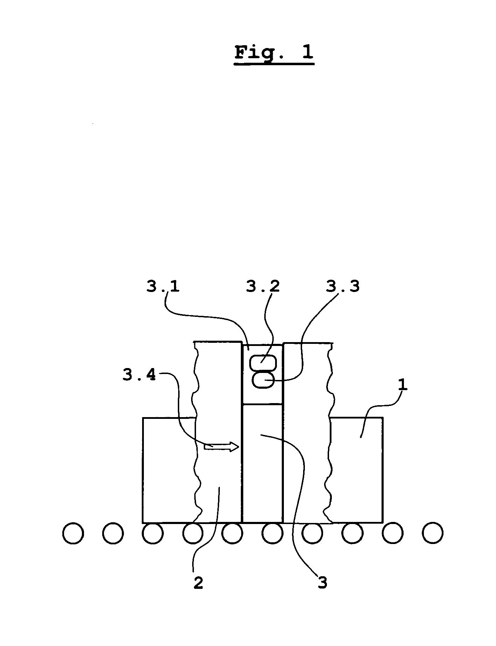

Fig. 1: zeigt in Aufrissdarstellung beispielhaft eine erfindungsgemäße Vorrichtung 3 für das punktuelle Reinigen und Inspizieren von Fehlern an Flachglasscheiben in einer Produktionslinie.

Die dargestellte erfindungsgemäße Vorrichtung und die Produktionslinie weisen folgende Merkmale auf:
- Ein automatisches Fehlererkennungssystem untersucht die Scheibe 1 im Produktionsablauf vor der Vorrichtung 3 und erkennt und kategorisiert Fehler. Zudem erfasst und verarbeitet dieses dabei auch die Koordinaten der einzelnen Fehler.
   (Fehler, welche durch das Fehlererkennungssystem mit ausreichend hoher Sicherheit (beispielsweise 98 %) als "nicht behebbar" kategorisiert werden, führen nicht zu einem Stopp der betroffenen Scheibe 1 an der Vorrichtung 3, sondern zu einem manuellen oder automatischen Ausschleusen der Scheibe 1 aus dem Produktionsfluss.)
- Die Vorrichtung 3 erstreckt sich nicht über eine Fläche in Scheibengröße, sondern nur über einen schmalen Streifen, dessen Länge zumindest gleich der Breite der Scheibe in der zur Fortbewegungsrichtung der Scheibe normal liegenden Richtung ("Y-Richtung") ist. Die Breite des Streifens liegt zumindest etwa parallel zur Fortbewegungsrichtung der Scheibe ("X-Richtung"). Diese Breite des Streifens beträgt beispielsweise 40 cm.
- Im Falle, dass eine Fehlerstelle an einer Scheibe entdeckt wird, wird die Scheibe beim Durchlauf durch die Vorrichtung 3 passend angehalten, sodass die X-Koordinate der Fehlerstelle im Zentrum der Vorrichtung 3, also in der Breitenmitte des besagten Streifens, liegt.
- Das in der Vorrichtung 3 integrierte optische Erkennungssystem 3.3 kann bei Bedarf - sofern das zuvor eingesetzte Fehlererkennungssystem nicht genügend Details über einen Fehler liefert - automatisch und punktgenau an die schon voridentifizierte Fehlerstelle herangeführt werden, um den Fehler genauer zu untersuchen. Dies ist vor allem im Hinblick darauf, ob es sich um eine Verunreinigung - also einen behebbaren Fehler - oder um einen Glasfehler - also um einen nicht behebbaren Fehler - handelt wichtig. Erforderlichenfalls kann damit auch festgestellt werden, auf welcher Seite sich der Fehler befindet. Nicht behebbare Fehler sind beispielsweise Kratzer und Einschlüsse. Behebbare Fehler sind beispielsweise Fingerabdrücke, Etikettenklebstoffrückstände, Schneidölrückstände.
   Typischerweise weist das optische Erkennungssystem 3.3 eine Digitalkamera oder einen optischen Sensor, eine Beleuchtung und eine Datenverarbeitungsanlage für Bildverarbeitung und eventuell einen Bildschirm auf, wobei Datenverarbeitungsanlage und ggf. Bildschirm bevorzugt von Kamera bzw. optischem Sensor und Beleuchtung entfernt und nicht verfahrbar angeordnet sind.
- An beiden Seiten der Scheibe 1 ist die Vorrichtung 3 mit einer verfahrbaren Reinigungsvorrichtung 3.2 ausgestattet. Abhängig von der Art des Fehlers bzw. der Fehler (nicht behebbar oder behebbar) wird die Scheibe 1 entweder sofort ausgeschleust oder es wird automatisch ein lokaler Reinigungsvorgang an der Fehlerstelle, natürlich an der richtigen Seite der Scheibe, durchgeführt. Dazu wird die automatische Reinigungsvorrichtung 3.2, typischerweise eine Art Poliergerät (antreibbar bewegbarer, von Reinigungstuch umspannter Druckkörper, optional Reinigungstuch mit Reinigungsmittel getränkt), an das Glas angedrückt und anschließend linear und/oder rotierend an der Fehlerstelle eine bestimmte Dauer bewegt.
   Im Rahmen der Erfindung sind auch andere als mechanische Reinigungsprinzipien beispielsweise chemische oder solche mit Ultraschall einsetzbar. Bei Bedarf kann - optional unterstützt durch eine optische Anzeigevorrichtung 3.4 - auch zusätzlich oder alternativ manuell gereinigt werden.
   Beim Reinigungsvorgang, insbesonders beim Reinigen von hinten durch den Druckaufschlag des Poliergerätes, besteht die Gefahr, dass die Scheibe nach vorne kippt und somit von der Anlage fällt oder dass die Scheibe unzulässig auf Biegung beansprucht wird. Um dies zu vermeiden ist es vorteilhaft die an der Gegenseite befindliche Reinigungsvorrichtung 3.2 ebenfalls an den Bereich des Glasfehlers heranzuführen und in dieser Position zu halten. Dadurch übt diese zweite Reinigungsvorrichtung einen Gegendruck zu der eigentlichen für die Reinigung des Fehlers eingesetzten Vorrichtung 3.2 auf die Scheibe aus und verhindert so das Kippen und/oder Biegen der Scheibe. Die nicht für das Reinigen eingesetzte Reinigungsvorrichtung braucht an der Scheibe nicht weiter bewegt zu werden.
- Nach dem zusätzlichen Reinigungsvorgang wird die Fehlerstelle ein weiteres Mal durch das optische Erkennungssystem 3.3 un-tersucht. Wenn der Fehler behoben ist, wird die Scheibe 1 im Produktionsablauf weiter bewegt. Wenn der Fehler noch besteht, können der Reinigungsvorgang und eine weitere Untersuchung auch wiederholt werden, bis entweder automatisch oder unter Hinzuziehung einer Bedienungsperson eine Entscheidung getroffen wird.
- Im dargestellten Beispiel sind das optische Erkennungssystems 3.3 und die Reinigungsvorrichtung 3.2 an einem verfahrbaren Schlitten 3.1 angeordnet, durch welchen sie im Einsatzfall an der Fehlerstelle positioniert werden.

Abschließend seien die Vorteile der erfindungsgemäßen Vorrichtung kurz aufgelistet:
- Geringerer Platzbedarf durch den reduzierten Inspektionsbereich.
- Automatische Reinigungsmöglichkeit sowohl an der Vorder- als auch an der Rückseite der Scheiben.
- Taktzeitverbesserung da die Beseitigung von Fehlern von der Rückseite der Scheibe unproblematisch rasch von statten geht.
- Taktzeitverbesserung, da Scheiben nur mehr bei Bedarf angehalten werden; Scheiben bei denen keinerlei Fehler erkannt wurde, werden durchgeschleust.
- Abschließende Inspektion (auch bei manuell unterstützter Fehlerbeseitigung) und somit eine Protokollierung des Reinigungsvorganges.

## Patentansprüche

1. In einer Produktionsstrecke für Flachglas nach einer vorgelagerte Vorrichtung für die automatische Erkennung von Fehlern und Fehlerpositionen anzubringende Vorrichtung (3) für das punktuelle Reinigen und Inspizieren von Fehlern an Flachglasscheiben, an welcher eine fehlerhafte Scheibe (1) automatisch anhaltbar und behandelbar ist,
**dadurch gekennzeichnet, dass**
- die Normalprojektion der Vorrichtung (3) in die Ebene der zu behandelnden Scheibe streifenförmig schmal ist, wobei die Streifenlängsrichtung annähernd im rechten Winkel zur Scheibentransportrichtung liegt,
- dass zumindest an einer Seite der Scheibe (1) im Bereich des besagen Streifens eine der Reinigung und Inspektion dienende Vorrichtung (3.2, 3.3) in Streifenlängsrichtung an einer Führung steuerbar verfahrbar angeordnet ist, wobei Zielpositionen des steuerbaren Verfahrens jene Fehlerpositionen an Flachglasscheiben sind, welche durch die vorgelagerte Vorrichtung für die automatische Erkennung von Fehlern und Fehlerpositionen detektiert werden.

2. Vorrichtung (3) nach Anspruch 1, **dadurch gekennzeichnet, dass** an beiden Seiten der Scheibe (1) eine der der Reinigung dienende Vorrichtung (3.2, 3.3) in Streifenlängsrichtung an einer Führung steuerbar verfahrbar angeordnet.

3. Vorrichtung (3) nach Anspruch 2, **dadurch gekennzeichnet, dass** während des Arbeitsvorgangs einer Reinigungsvorrichtung (3.2) an einer Seite der Scheibe (1) die Reinigungsvorrichtung (3.2) an der zweiten Seite der Scheibe (1) in an die Scheibe (1) herangeführtem und an diese angedrücktem Zustand haltbar ist.
